Europäisches Patentamt

European Patent Office

Office européen des brevets

(19)

(11) EP 1 058 128 B1

(12) FASCICULE DE BREVET EUROPEEN

(45) Date de publication et mention
de la délivrance du brevet:
**08.12.2004 Bulletin 2004/50**

(51) Int Cl.⁷: **G01T 1/17**

(21) Numéro de dépôt: **00401503.8**

(22) Date de dépôt: **29.05.2000**

(54) **Dispositif et procédé de discrimination d'impulsions de détecteurs de rayonnement à semi-conducteur**

Verfahren und Vorrichtung zur Unterscheidung von Impulsen von Halbleiter-Strahlungsdetektoren

Method and device for discriminating pulses from semi-conductor radiation-detectors

(84) Etats contractants désignés:
DE GB IT

(30) Priorité: **02.06.1999 FR 9906948**

(43) Date de publication de la demande:
**06.12.2000 Bulletin 2000/49**

(73) Titulaire: **COMMISSARIAT A L'ENERGIE ATOMIQUE**
**75752 Paris Cédex 15 (FR)**

(72) Inventeurs:
• **Montemont, Guillaume**
 **38000 Grenoble (FR)**
• **Arques, Marc**
 **38100 Grenoble (FR)**

(74) Mandataire: **Weber, Etienne Nicolas et al**
**c/o Brevatome,**
**3, rue du Docteur Lancereaux**
**75008 Paris (FR)**

(56) Documents cités:
**US-A- 5 354 991**

• EISEN Y ET AL: "Correction of incomplete charge collection in CdTe detectors" NUCLEAR INSTRUMENTS & METHODS IN PHYSICS RESEARCH, SECTION - A: ACCELERATORS, SPECTROMETERS, DETECTORS AND ASSOCIATED EQUIPMENT,NL,NORTH-HOLLAND PUBLISHING COMPANY. AMSTERDAM, vol. A353, no. 1, 30 décembre 1994 (1994-12-30), pages 60-66, XP004005822 ISSN: 0168-9002
• GARCIA-BELMONTE G ET AL: "Digital implementation of filters for nuclear applications using the discrete wavelet transform" NUCLEAR INSTRUMENTS & METHODS IN PHYSICS RESEARCH, SECTION - A: ACCELERATORS, SPECTROMETERS, DETECTORS AND ASSOCIATED EQUIPMENT,NL,NORTH-HOLLAND PUBLISHING COMPANY. AMSTERDAM, vol. 380, no. 1, 1 octobre 1996 (1996-10-01), pages 376-380, XP004015536 ISSN: 0168-9002
• RICHTER M ET AL: "High resolution gamma ray spectroscopy with CdTe detector systems" SEVENTH INTERNATIONAL WORKSHOP ON ROOM TEMPERATURE SEMICONDUCTOR X- AND GAMMA-RAY DETECTORS AND ASSOCIATED ELECTRONICS, RAVELLO, ITALY, 23-28 SEPT. 1991, vol. A322, no. 3, pages 529-537, XP000861784 Nuclear Instruments & Methods in Physics Research, Section A (Accelerators, Spectrometers, Detectors and Associated Equipment), 15 Nov. 1992, Netherlands ISSN: 0168-9002

**Description**

Domaine technique

La présente invention concerne un dispositif et un procédé de discrimination d'impulsions de détecteurs de rayonnement à semi-conducteur, et en particulier de détecteurs de rayonnement gamma.

Les impulsions électriques fournies par les détecteurs de rayonnement gamma dépendent d'un certain nombre de paramètres de détection dont l'influence respective est variable en fonction des conditions de détection.

L'invention vise en particulier à identifier l'influence d'un certain nombre de paramètres et à effectuer, en fonction de cette influence, une discrimination des signaux.

La discrimination peut consister notamment à sélectionner les impulsions, et donc les "événements" détectés qui correspondent à des conditions de détection déterminées, et à rejeter les autres impulsions.

L'invention trouve des applications dans les domaines de la spectrométrie gamma et en médecine nucléaire.

Etat de la technique antérieure

Une illustration de l'état de la technique est donnée ci-après en référence à des exemples empruntés à la médecine nucléaire.

En médecine nucléaire, selon certaines méthodes de diagnostic, on injecte à un patient des radioéléments sous la forme de molécules marquées par un traceur radioactif tel que, par exemple, le technétium, l'iode ou le thallium. Selon le type de molécules utilisées, celles-ci se fixent sélectivement sur certains tissus ou organes.

Une gamma-caméra est ensuite utilisée pour détecter les rayons gamma issus du patient, et pour constituer une image des tissus ou de l'organe concerné. Le contraste de l'image dépend de la fixation des radioéléments par les tissus.

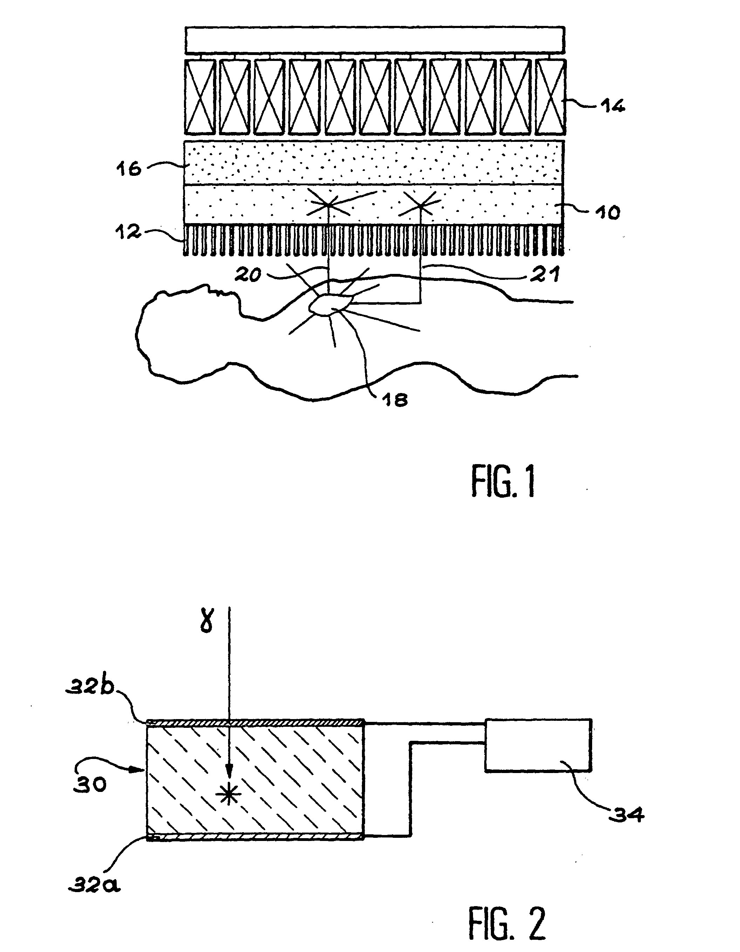

Les gamma-caméras utilisées sont pour la plupart des caméras de type Anger. Une telle caméra est représentée schématiquement à la figure 1.

La gamma-caméra comporte pour l'essentiel un cristal scintillateur 10, équipé d'un collimateur 12, et une pluralité de photomultiplicateurs 14 couplés optiquement avec le cristal scintillateur par un matériau transparent 16.

Un calcul barycentrique effectué sur le signal délivré par chaque photomultiplicateur, en réponse à un événement, permet de localiser l'endroit du cristal scintillateur où le rayonnement gamma a interagi avec la matière.

Cette localisation permet de connaître également la position d'une zone radioactive 18 d'où le rayonnement a été émis. Ceci est possible notamment grâce au collimateur 12 qui, comme le montre la figure 1, permet d'éliminer les rayonnements dont l'incidence n'est pas sensiblement normale à la face d'entrée du détecteur.

Les rayons gamma qui atteignent le cristal scintillateur peuvent, comme le rayon 20 de la figure 1, être des rayons qui, après avoir quitté la zone radioactive 18, interagissent directement avec le détecteur. Ces rayons font partie d'un phénomène désigné dans la suite du texte par "rayonnement direct".

D'autres rayons, en revanche, interagissent une ou plusieurs fois avec la matière environnant la zone radioactive avant d'atteindre le scintillateur. Ceci est le cas, par exemple, du rayon 21 sur la figure, qui interagit une première fois dans le patient, en dehors de la zone radioactive. Après cette première interaction, un rayon gamma diffusé, de plus faible énergie, atteint le scintillateur. Ce phénomène, dû à l'effet Compton, est désigné par "rayonnement diffusé" dans la suite du texte.

On observe sur la figure que le rayonnement diffusé est susceptible de provoquer une localisation erronée de la zone radioactive et contribue à dégrader le contraste de l'image médicale, par ajout de bruit.

Comme évoqué ci-dessus, le rayonnement diffusé se caractérise par le fait que son énergie est inférieure à celle du rayonnement direct.

En effectuant une discrimination des signaux de détection, c'est-à-dire en rejetant ceux dont l'amplitude en fonction de l'énergie est inférieure à un seuil déterminé ou dont l'amplitude en fonction de l'énergie est située en dehors d'une fenêtre déterminée, il est possible d'éliminer la contribution du rayonnement diffusé.

En général, on fixe une fenêtre en amplitude autour de la valeur maximale d'amplitude en fonction de l'énergie des signaux pour une énergie d'émission donnée de la zone radioactive.

Si la fenêtre est étroite, on augmente le contraste de l'image en limitant l'acceptation du rayonnement diffusé. Ceci, cependant, se fait au détriment du nombre d'événements efficaces détectés, c'est-à-dire du nombre d'événements utilisables pour la formation d'une image.

Inversement, si la fenêtre est plus large, le nombre d'événements est plus grand pour un même temps de mesure, mais le contraste de l'image se trouve dégradé.

Dans le cadre des applications à l'imagerie médicale, il n'est pas possible d'injecter aux patients de trop fortes doses radioactives et il n'est pas confortable de prolonger pour un temps long la durée de l'examen. Ainsi, le nombre d'événements efficaces mesurés par unité de temps et la résolution en énergie du détecteur sont des paramètres importants.

La résolution en énergie est comprise comme étant le rapport de la largeur à mi-hauteur d'une distribution du pic d'énergie autour de la valeur d'énergie d'émission, sur l'énergie d'émission.

Un développement récent de gamma-caméras, dans lesquelles les détecteurs à scintillateur sont remplacés par des détecteurs à semi-conducteur, a permis d'améliorer l'acquisition des événements en termes d'efficacité et de résolution en énergie.

Les détecteurs à semi-conducteur comme par exemple le CdTe, CdZnTe, AsGa, $PbI_2$ convertissent directement les photons gamma en porteurs de charges. Pour un rayonnement de même intensité, le nombre de charges créées est d'un ordre de grandeur supérieur à celui obtenu en détection indirecte avec les détecteurs à scintillateur. Ainsi, la résolution des détecteurs à semi-conducteur est également améliorée.

La figure 2 montre la structure d'un détecteur à semi-conducteur individuel 30. Une pluralité de tels détecteurs sont en général associés pour former une tête de détection.

Le détecteur de la figure 2 se présente sous la forme d'un bloc de semi-conducteur avec deux faces parallèles opposées sur lesquelles sont prévues des électrodes 32a, 32b. Un champ électrique appliqué sur les électrodes permet de faire migrer les porteurs de charges, c'est-à-dire les électrons et les trous formés par l'interaction du rayonnement avec le semi-conducteur. Les électrodes sont également prévues pour collecter les charges et les transférer vers des circuits électroniques 34 pour la formation d'un signal de détection. Ce signal se présente sous la forme d'impulsions correspondant respectivement à des interactions.

Ces interactions se caractérisent par l'énergie qu'elles cèdent au détecteur et par la profondeur à laquelle elles ont lieu dans le détecteur. Cette profondeur peut être comprise comme la distance à parcourir par les charges pour atteindre l'une des électrodes.

Toutes les charges créées dans le semi-conducteur ne migrent pas directement vers les électrodes. En effet, des défauts dans les semiconducteurs piègent certains porteurs de charges au cours de leur migration et diminuent leur durée de vie et ce, d'autant plus que le semi-conducteur est épais.

La charge créée par un rayonnement gamma se répartit en une charge portée par les électrons et en une charge portée par les trous. Or, la mobilité des trous est inférieure à celle des électrons et leur efficacité de collection est plus mauvaise. Ainsi, l'ensemble des charges créées ne contribue pas de façon égale au signal de détection finalement délivré.

Dans le spectre en énergie du signal de détection, ceci se traduit par une "traînée" correspondant à une énergie plus faible que l'énergie des photons atteignant la matière du détecteur.

La "traînée" est caractéristique du piégeage de charges dans la matière avant leur collection.

Les événements détectés, dont l'énergie est inférieure à l'énergie des photons gamma effectivement reçus, en raison du phénomène de piégeage, sont alors confondus avec ceux résultant du rayonnement diffusé mentionné précédemment, pour lequel l'énergie est également inférieure à celle du rayonnement direct.

Comme les électrodes des détecteurs sont généralement ménagées à leur surface, le phénomène de piégeage est directement lié à la profondeur à laquelle le rayonnement interagit dans le détecteur.

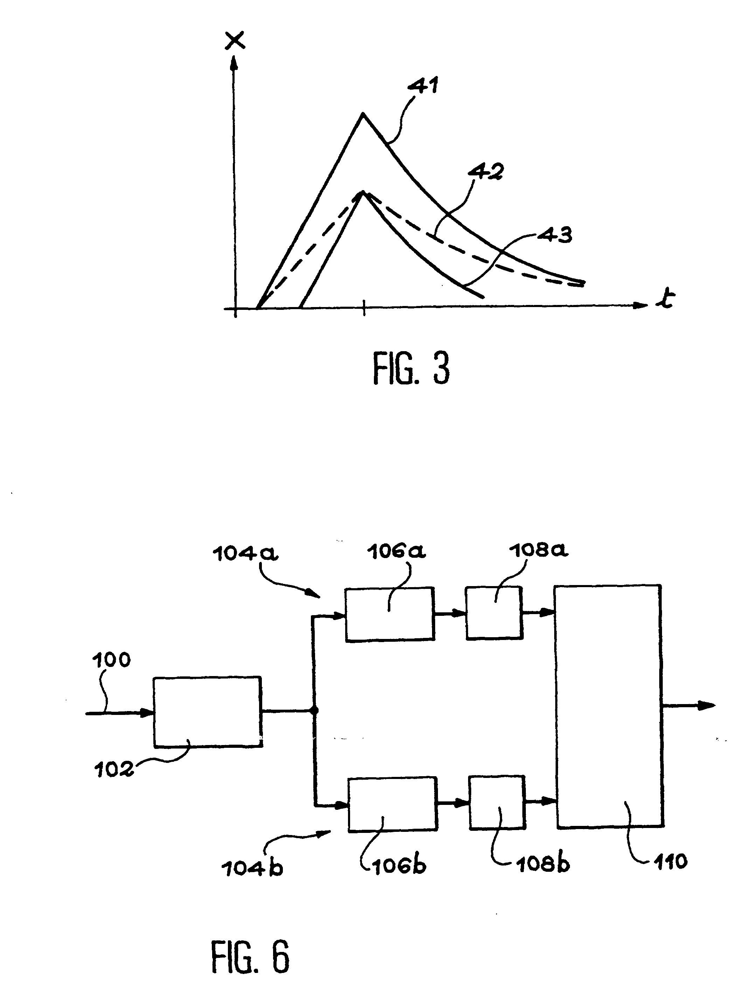

La figure 3 est un graphique qui indique, en ordonnée, l'évolution de l'amplitude en fonction du temps, reporté en abscisse, de différents signaux de détection pouvant être émis par un détecteur de rayonnement gamma conforme à la figure 2, dans différentes conditions de détection.

Le signal portant la référence 41 présente l'amplitude la plus forte et correspond à la détection d'un rayonnement direct qui a interagi à une faible profondeur dans le détecteur.

Ce signal est un signal utile, par exemple pour la formation d'une image médicale.

Le signal portant la référence 42 présente une amplitude plus faible. Il correspond à un rayonnement diffusé de plus faible énergie qui a également interagi à une faible profondeur dans le détecteur.

Ce signal est un signal parasite dans la mesure où l'énergie de l'interaction qu'il représente ne correspond pas à l'énergie réelle du rayonnement incident. Il est susceptible de conduire à une localisation erronée de l'interaction.

Comme évoqué précédemment, la contribution de ce signal pourrait être écartée en éliminant le signal par un dispositif de discrimination à seuil d'amplitude.

Le signal portant la référence 43 présente une amplitude sensiblement égale à celle du signal portant la référence 42.Il correspond pourtant à un événement de détection d'un rayonnement direct, de même énergie que le rayonnement du signal portant la référence 41.

Son amplitude plus faible résulte simplement du fait que l'interaction a eu lieu à une profondeur plus importante et qu'une partie des charges a été piégée.

Ce signal est un signal utile. Cependant, en effectuant une discrimination à seuil d'amplitude telle qu'indiquée précédemment, le signal 43 est éliminé au même titre que le signal parasite correspondant à un rayonnement diffusé.

Il apparaît ainsi qu'une simple discrimination sur l'amplitude, ou sur l'énergie qu'elle représente, revient à éliminer arbitrairement un certain nombre d'événements de détection pourtant représentatifs d'une interaction directe. Il en résulte une diminution importante de l'efficacité et de la résolution de détection.

Pour résoudre ce problème, on connait déjà un dispositif (US-A-5 354 991), dans lequel on considère une représentation en trois dimensions (temps, amplitude, nombre d'événements) d'une succession d'événements. Une série régulière de sommets indique qu'il s'agit d'un signal de rayonnement direct, tandis que les signaux Compton produisent une distribution aléatoire de sommets.

D'autres aspects de l'état de la technique relatif à l'invention sont exposés dans les documents (1), (2) et (3) dont les références sont précisées à la fin de la présente description.

Exposé de l'invention

La présente invention a pour but de proposer un dispositif et un procédé de discrimination permettant de prendre en compte les paramètres physiques qui gouvernent la forme du signal de détection de façon à distinguer avec une meilleure acuité les signaux correspondant à des rayonnements directs et ceux correspondant à des rayonnements diffusés.

Un autre but est de proposer un moyen de discrimination pouvant être effectuée en temps réel sur les signaux, et ce avant leur exploitation pour la spectrométrie ou pour la formation d'une image médicale, par exemple.

Un but est en particulier de proposer un moyen de discrimination permettant de tenir compte de l'énergie et de la profondeur d'interaction des rayonnements détectés.

Pour atteindre ces buts, l'invention a plus précisément pour objet un dispositif comme défini dans la revendication 1.

Les paramètres de détection peuvent être en particulier l'énergie et la profondeur de l'interaction. Les paramètres de pente peuvent être identiques aux paramètres de détection, ou, selon d'autres possibilités, peuvent être des valeurs quadratiques ou des produits de l'énergie et de la profondeur d'interaction.

Un paramètre de pente, au sens de l'invention, peut être compris comme un paramètre qui influe non seulement sur l'amplitude du signal mais également sur sa pente. La pente est comprise ici comme la dérivée de l'impulsion par rapport au paramètre de pente choisi.

L'invention repose en effet sur la constatation que les paramètres de pente tels que définis ci-dessus, et en particulier l'énergie et la profondeur de l'interaction, influent non seulement sur l'amplitude de l'impulsion mais aussi sur sa forme, c'est-à-dire sur sa dérivée par rapport aux paramètres considérés.

Des moyens de transformation, décrits de façon plus détaillée dans la suite du texte, sont prévus pour amplifier l'influence d'un ou de plusieurs paramètres de pente sur le signal de façon à obtenir une impulsion transformée hautement sensible à un paramètre de pente choisi.

Cette impulsion transformée est ensuite fournie à l'intégrateur qui effectue une intégration sur le temps, sur une durée déterminée. Cette durée correspond, par exemple, à la durée maximale des impulsions pour minimiser le bruit et pour ne pas superposer les impulsions successives.

La valeur de caractérisation délivrée par l'intégrateur est ainsi hautement représentative de l'influence de l'un des paramètres de pente sur l'impulsion délivrée par le détecteur.

La valeur de caractérisation permet ensuite d'effectuer un tri des impulsions, ou une discrimination. Cette discrimination permet alors de tenir compte de façon non-corrélée de l'un ou de plusieurs paramètres influant sur l'impulsion et donc de tenir compte des conditions de détection.

Selon un aspect avantageux de l'invention, en particulier pour la discrimination d'impulsions électriques affectées de bruit, les moyens de transformation des impulsions peuvent comporter des moyens de filtrage en fréquence pour blanchir le bruit.

Ces moyens comprennent, par exemple, des filtres passe-bande destinés à augmenter le bruit dans des plages spectrales ou celui-ci est faible et à diminuer le bruit dans des plages spectrales où le bruit est important, de façon à obtenir un bruit sensiblement blanc. Par ailleurs, un filtrage adapté de l'impulsion permet de maximiser le rapport de signal sur bruit et d'obtenir ainsi une bonne résolution énergétique de détection. Dans le cas où les impulsions sont affectées d'un bruit à spectre blanc, la présence des filtres n'est pas nécessaire.

La résolution énergétique est définie ici comme un rapport entre un pouvoir de séparation et l'énergie des photons gamma détectés.

Selon une première réalisation possible des moyens de transformation, ceux-ci comportent dans l'ordre entre une entrée et une sortie de signal, un filtre passe-bande et un amplificateur à gain sous-linéaire.

Dans cette configuration, les moyens de transformation permettent d'accentuer essentiellement l'influence d'un paramètre de pente fonction de la profondeur de l'interaction.

Selon une variante, les moyens de transformation de l'impulsion peuvent comporter également, dans l'ordre entre une entrée et une sortie de signal, un filtre passe-bande et un amplificateur à gain quadratique. D'une façon générale, un amplificateur à gain sur-linéaire peut être utilisé.

Dans cette configuration, les moyens de transformation permettent d'accentuer essentiellement l'influence d'un paramètre de pente fonction de l'énergie de l'interaction. La transformation est d'autant plus accentuée que le gain de l'amplificateur est fortement sur-linéaire.

Dans les dispositifs décrits ci-dessus, le choix d'un paramètre de pente lié plutôt à l'énergie d'interaction ou plutôt à la profondeur de l'interaction est déterminé essentiellement par un réglage de la bande passante du filtre et du gain de l'amplificateur.

Selon une autre variante, destinée également à mettre en valeur l'influence de la profondeur d'interaction, les moyens de transformation de l'impulsion peuvent également comporter dans l'ordre entre une entrée et une sortie de signal :

- une première branche comprenant un premier filtre passe-bande et un amplificateur à gain quadratique,

- une deuxième branche connectée en parallèle à la première branche, équipée d'un deuxième filtre passe-bande présentant une bande passante plus large qu'une bande passante du premier filtre,
- un additionneur connecté à la sortie de signal et prévu pour recevoir et additionner des signaux desdites première et deuxième branches.

Pour réaliser la discrimination, le dispositif de l'invention peut comporter des moyens de mémorisation d'une fenêtre de valeurs de caractérisation. Des moyens de tri sont alors prévus pour comparer la valeur de caractérisation de chaque impulsion aux valeurs de la fenêtre mémorisée et pour sélectionner les impulsions pour lesquelles la valeur de caractérisation coïncide avec ladite fenêtre. Ces moyens peuvent être réalisés sous la forme d'un logiciel traité par ordinateur.

Dans une réalisation perfectionnée, le dispositif peut comporter deux moyens de transformation de l'impulsion pour obtenir en fonction de deux paramètres de pente distincts, deux impulsions transformées distinctes et pour établir respectivement pour chaque impulsion un couple de valeurs de caractérisation distinctes. Dans ce cas, le dispositif comprend des moyens de mémorisation d'une fenêtre biparamétrique, c'est-à-dire une fenêtre à deux dimensions, et les moyens de tri sont prévus pour comparer chaque couple de valeurs de caractérisation aux valeurs de la fenêtre biparamétrique et sélectionner les impulsions pour lesquelles les deux valeurs de caractérisation coïncident avec ladite fenêtre biparamétrique.

L'invention concerne également un procédé de discrimination d'impulsions électriques comme défini dans la revendication 8.

D'autres caractéristiques et avantages de l'invention ressortiront mieux de la description qui va suivre, en référence aux figures des dessins annexés. Cette description est donnée à titre purement illustratif et non limitatif.

Brève description des figures

- La figure 1, déjà décrite, est une représentation schématique simplifiée, en coupe, d'un détecteur d'une gamma-caméra classique de type Anger.
- La figure 2, déjà décrite, est une coupe schématique simplifiée d'un détecteur individuel à semi-conducteur.
- La figure 3 est un graphique qui indique l'évolution temporelle de signaux de détection d'un détecteur de rayons gamma à semi-conducteur, pour différentes valeurs d'énergie et de profondeur d'interaction.
- La figure 4 est un graphique qui indique l'évolution temporelle de deux signaux de détection délivrés par un détecteur à semi-conducteur et correspondant à des événements d'énergie différente ayant lieu sensiblement à la même profondeur.
- La figure 5 est un graphique qui indique l'évolution temporelle de deux signaux de détection délivrés par un détecteur à semi-conducteur et correspondant à des événements avec sensiblement la même énergie mais ayant lieu à des profondeurs différentes.
- La figure 6 est une vue schématique et simplifiée d'une réalisation particulière d'un dispositif de discrimination conforme à l'invention.
- Les figures 7 et 8 sont des graphiques qui indiquent l'évolution temporelle de deux signaux de détection transformés dans une première voie du dispositif de discrimination de la figure 6.
- Les figures 9 et 10 sont des graphiques qui indiquent l'évolution temporelle de deux signaux de détection transformés dans une deuxième voie du dispositif de discrimination de l'invention.
- Les figures 11, 12 sont des vues schématiques simplifiées de différentes possibilités de réalisation de moyens de transformation des signaux du dispositif de discrimination.
- La figure 13 est un graphique représentant des événements de détection en fonction de valeurs de caractérisation établies par le dispositif de l'invention, et identifiant une fenêtre biparamétrique de discrimination.

Description détaillée de modes de mise en oeuvre de l'invention

Comme indiqué précédemment, l'invention se fonde sur l'influence de deux paramètres, qui sont essentiellement l'énergie et la profondeur d'interaction, sur les signaux de détection délivrés par un ou plusieurs détecteurs à semi-conducteur.

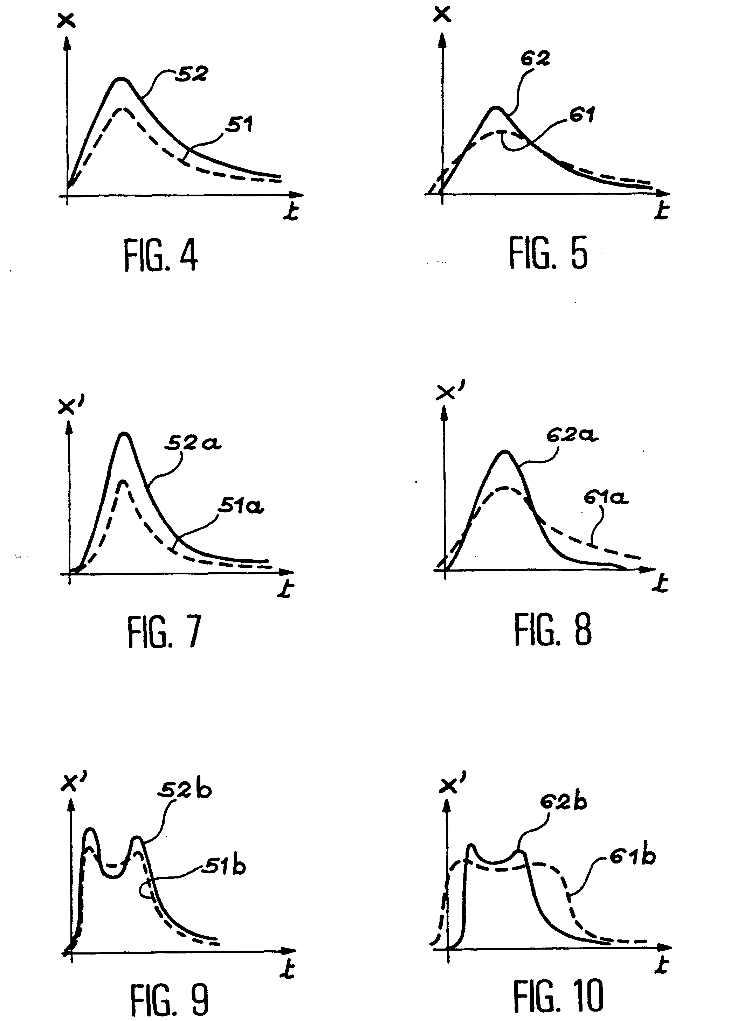

Le graphique de la figure 4 montre deux signaux, portant respectivement les références 51 et 52, et correspondant à des énergies différentes $E_1$ et $E_2$ telles que $E_2 > E_1$. Les deux signaux proviennent d'interactions qui ont lieu sensiblement à la même profondeur.

On observe que l'amplitude X du signal 52, d'énergie la plus grande, est plus forte que celle du signal 51. Les signaux sont toutefois sensiblement de même forme et donc sensiblement homothétiques.

Le graphique de la figure 5 montre deux signaux portant les références 61 et 62 qui correspondent à des interactions, sensiblement de même énergie, qui ont lieu, respectivement à des profondeurs $p_1$ et $p_2$ telles que $p_2 > p_1$. On observe que les signaux ne présentent pas de forme homothétique l'une à l'autre.

Le traitement des signaux des figures 4 et 5 est décrit dans la suite de la description.

La figure 6 montre les principaux éléments d'un dispositif de discrimination selon une mise en oeuvre particulière de l'invention.

Les signaux de détection provenant d'un ou de plusieurs détecteurs à semi-conducteur, non représentés, sont introduits dans le dispositif en une borne d'entrée 100. Un filtre 102, par exemple, du type passe-bande est connecté à l'entrée 100 et permet de mettre en forme les signaux.

En particulier, et comme décrit précédemment, le filtre peut être accordé de façon à rendre homogène, sur le spectre de détection, la contribution du bruit qui se superpose aux signaux. Le bruit est ainsi apparenté à un bruit blanc.

La sortie du filtre 102 est dirigée vers des premier et deuxième canaux 104a et 104b comprenant chacun des moyens de transformation du signal 106a, 106b.

Le premier moyen de transformation du signal 106a, décrit plus en détail dans la suite du texte, est destiné à augmenter la valeur de la dérivée de l'impulsion par rapport à un premier paramètre de pente. Dans l'exemple décrit, ce premier paramètre est l'énergie d'interaction.

Une impulsion transformée, délivrée par le premier moyen de transformation 106a est dirigée vers un intégrateur 108a qui fait une somme ou une moyenne du signal sur une durée prédéterminée T, par exemple, égale à la durée de l'impulsion.

La valeur de la somme constitue une première valeur de caractérisation dirigée vers des moyens de tri 110.

La valeur de caractérisation, notée $Z_1(T)$, pourrait être exprimée mathématiquement, par exemple, par :

$$Z_1(T) = \int_0^T \frac{dX(t)}{dt} \cdot \frac{dX(t)}{dE} \cdot dt$$

où t est le temps, T la période d'intégration, E l'énergie et X une fonction représentant le signal de détection.

De la même façon, le deuxième moyen de transformation du signal 106b, du deuxième canal 104b est destiné à augmenter la valeur de la dérivée de l'impulsion par rapport à un deuxième paramètre de pente. Dans l'exemple illustré, ce deuxième paramètre est la profondeur de l'interaction.

L'impulsion ainsi transformée est dirigée vers un intégrateur 108b qui établit également une somme du signal sur une durée prédéterminée T.

La valeur de la somme constitue une deuxième valeur de caractérisation dirigée également vers les moyens de tri 110.

La deuxième valeur de caractérisation, notée $Z_2(T)$, pourrait être exprimée mathématiquement, par exemple, par :

$$Z_2(T) = \int_0^T \frac{dX(t)}{dt} \cdot \frac{dX(t)}{dp} \cdot dt$$

où p est la profondeur à laquelle a lieu l'interaction à l'origine du signal traité.

Les figures 7 et 8 montrent respectivement des signaux d'impulsions transformées obtenus à partir des impulsions correspondant aux signaux des figures 4 et 5. Les signaux d'impulsions transformées des figures 7 et 8 sont délivrés par les premiers moyens de transformation 106a.

Les références 51a, 52a, 61a, 62a correspondent respectivement aux signaux obtenus à partir des signaux 51, 52, 61, 62 des figures 4 et 5.

On observe que la différence des intégrales entre les signaux des impulsions transformées 51a et 52a de la figure 7 est renforcée par rapport à celle existant entre les signaux des impulsions initiales 51 et 52 de la figure 4.

Ceci montre que la transformation obtenue dans le premier canal 104a est sensible à l'énergie. L'énergie de l'impulsion est en effet liée à l'amplitude du signal.

En revanche, les signaux 61a et 62a de la figure 8 ne sont quasiment pas mieux différenciés en intégrale que les signaux 61, 62 de la figure 5.

Les figures 9 et 10 montrent respectivement les signaux des impulsions transformées obtenus à partir des impulsions initiales dont les signaux sont représentés aux figures 4 et 5. Les signaux correspondant aux impulsions transformées sont délivrés par les seconds moyens de transformation 106b.

Les références 51b, 52b, 61b, 62b correspondent respectivement aux signaux obtenus par transformation des signaux 51, 52, 61, 62 des figures 4 et 5.

On observe que la différence d'intégrale entre les signaux 61b et 62b des impulsions transformées de la figure 10 est nettement renforcée par rapport à celle existant entre les signaux initiaux 61 et 62 de la figure 5.

Ceci montre que la transformation obtenue dans le deuxième canal 104b du dispositif de la figure 6 est sensible à la profondeur de l'interaction. En effet, la profondeur d'interaction est le paramètre physique qui distingue les impulsions correspondant aux signaux de la figure 5.

Cette distinction est renforcée dans le deuxième canal.

En revanche, les signaux 51b et 52b de la figure 9, dont la forme a été modifiée par rapport aux signaux initiaux, sont moins bien différenciés que les signaux de la figure 4.

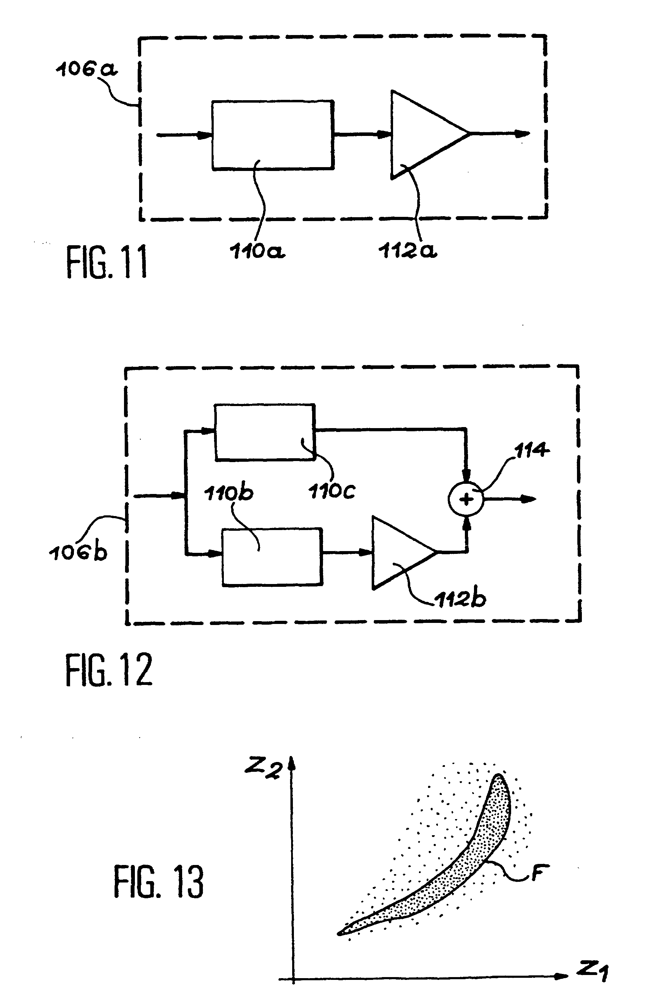

La figure 11 montre une possibilité de réalisation des moyens de transformation des impulsions, sensibles à l'énergie de l'interaction. Cette possibilité correspond par exemple aux premiers moyens de transformation 106a de la figure 6.

Les moyens de transformation comportent dans l'ordre, et en série, un filtre passe-bande 110a et un amplificateur 112a à gain quadratique prévu pour élever le signal qu'il reçoit au carré.

Les valeurs d'accord du filtre et le gain de l'amplificateur sont ajustés pour obtenir la meilleure différenciation possible des impulsions transformées en fonction de l'énergie des interactions.

On peut observer que si on choisit un paramètre "énergie x profondeur", comme paramètre de transformation, on peut utiliser les mêmes moyens à amplificateur quadratique que ceux utilisés pour le paramètre "énergie".

Pour la réalisation de moyens de transformation des impulsions sensibles à la profondeur des interactions, c'est-à-dire des moyens indiqués avec la référence 106b sur la figure 6, il est possible, par exemple, de remplacer l'amplificateur 112a par un amplificateur à gain sous-linéaire. En effet, plus le gain est sous-linéaire, plus l'impulsion transformée a une amplitude constante. Son intégration représente alors la durée de l'impulsion initiale, c'est-à-dire la profondeur de l'interaction.

Une autre possibilité de réalisation des moyens de transformation des impulsions sensibles à la profondeur des interactions, c'est-à-dire en l'occurrence des deuxièmes moyens 106b, est illustrée par la figure 12.

Les moyens de transformation de la figure 12 comportent dans l'ordre une première branche avec un premier filtre passe-bande 110b et un amplificateur à gain quadratique 112b, et une deuxième branche connectée en parallèle à la première branche, équipée d'un deuxième filtre passe-bande 110c présentant une bande passante plus large que celle du premier filtre.

Un additionneur 114 est prévu pour recevoir un signal des première et deuxième branches et pour délivrer un signal correspondant à la somme des signaux.

La sortie des moyens de transformation est connectée, comme expliqué précédemment, à l'entrée des intégrateurs 108a et 108b visibles à la figure 6.

L'utilisation des première et deuxième valeurs de caractérisation délivrées par les intégrateurs pour la discrimination des impulsions est désormais examinée en référence à la figure 13.

La figure 13 est un graphique correspondant à un espace à deux dimensions où chaque interaction détectée est représentée par un point dont les coordonnées sont les deux valeurs de caractérisation $Z_1$ et $Z_2$ établies dans les deux canaux 104a, 104b du dispositif de la figure 6.

Dans cet espace, on définit une ou plusieurs fenêtres biparamétriques utilisées pour effectuer le tri des impulsions.

Dans l'exemple particulier décrit ici, une fenêtre biparamétrique délimitée par une ligne F correspond aux couples de valeurs de caractérisation pour lesquels l'interaction détectée peut être considérée comme étant une interaction directe.

La fenêtre matérialisée par la ligne F sur la figure 13 peut en fait être une liste de couples de valeurs de caractérisation considérées comme acceptables ou une liste de valeurs de caractérisation limites mémorisées dans une mémoire des moyens de tri 110 de la figure 6.

Pour chaque nouvelle impulsion détectée, on établit un couple de valeurs de caractérisation et on compare ces valeurs aux valeurs mémorisées ou aux valeurs limites mémorisées. Comme indiqué précédemment ces opérations peuvent être réalisées par ordinateur.

Si la comparaison révèle une concordance, ou en d'autres mots, en se référant à la figure 13, si l'événement correspondant peut être placé à l'intérieur de la fenêtre délimitée par la courbe F, l'événement et l'impulsion sont conservés.

Au contraire, si les valeurs de caractérisation sont en dehors des valeurs mémorisées ou des limites fixées, l'événement correspondant est rejeté. Ces événements correspondent dans l'exemple décrit à un rayonnement diffusé, par exemple.

Ce tri permet de retenir un certain nombre d'événements pour des fins de spectrométrie ou d'imagerie médicale.

## DOCUMENTS CITES

*(1)* "High resolution gamma ray spectroscopy with CdTe detector systems
M. Richter et P. Siffert
Nuclear Instruments and Methods in Physics Research A 322 (1992) 529-537

*(2)* "Correction of incomplete charge collection in CdTe detectors
Y. Eisen, Y. Horovitz
Nuclear Instruments and Methods in Physics Research A 353 (1994) 60-66

*(3)* "Digital implementation of filters for nuclear applications using the discrete wavelet transform G. Garci-Belmonte et al.
Nuclear Instruments and Methods in Physics Research A 380 ( 1996) 376-380.

## Revendications

**1.** Dispositif de discrimination d'impulsions électriques fournies par au moins un détecteur de rayonnement à semi-conducteur, **caractérisé en ce qu'**il comprend:

- au moins un premier moyen de transformation des impulsions (106a) et au moins un deuxième moyen de transformation des impulsions (106b) délivrant respectivement, en réponse à une impulsion du détecteur, une première impulsion transformée et une deuxième impulsion transformée, les premier et deuxième moyens de transformation étant aptes, chacun, à augmenter une valeur d'une dérivée de l'impulsion par rapport à au moins un paramètre, dit paramètre de pente, qui est fonction d'au moins un paramètre de détection pris parmi l'énergie du rayonnement et la profondeur d'interaction du rayonnement,

- au moins un intégrateur (108a, 108b) apte à établir pour chaque première impulsion transformée, une première valeur de caractérisation et, pour chaque deuxième impulsion transformée, une deuxième valeur de caractérisation, lesdites valeurs de caractérisation étant obtenues par intégration des impulsions transformées, et

- des moyens de tri (110) des impulsions en fonction des premières et deuxièmes valeurs de caractérisation.

2. Dispositif selon la revendication 1, pour la discrimination d'impulsions électriques affectées de bruit, comportant des moyens de filtrage en fréquence (102) pour blanchir le bruit.

3. Dispositif selon la revendication 1, dans lequel les premier et deuxième moyens de transformation de l'impulsion comportent, chacun, dans l'ordre entre une entrée et une sortie de signal, un filtre passe-bande (110a) et un amplificateur (112a) à gain sous-linéaire.

4. Dispositif selon la revendication 1, dans lequel les premier et deuxième moyens de transformation de l'impulsion comportent, chacun, dans l'ordre entre une entrée et une sortie de signal, un filtre passe-bande et un amplificateur à gain quadratique.

5. Dispositif selon la revendication 1, dans lequel les premier et deuxième moyens de transformation de l'impulsion comportent, chacun, dans l'ordre entre une entrée et une sortie de signal :

- une première branche comprenant un premier filtre passe-bande (110b) et un amplificateur à gain quadratique (112b),

- une deuxième branche connectée en parallèle à la première branche, équipée d'un deuxième filtre passe-bande (110c) présentant une bande passante plus large qu'une bande passante du premier filtre, et

- un additionneur (114) connecté à la sortie de signal et prévu pour recevoir et additionner des signaux desdites première et deuxième branches.

6. Dispositif selon la revendication 1, dans lequel le paramètre de pente est l'énergie du rayonnement, ou la profondeur d'interaction du rayonnement, ou l'énergie du rayonnement élevée au carré, ou la profondeur d'interaction du rayonnement élevée au carré, ou le produit de l'énergie du rayonnement par la profondeur d'interaction du rayonnement.

7. Dispositif selon la revendication 1, comprenant des moyens de mémorisation d'une fenêtre biparamétrique de valeurs de caractérisation, dans lequel les moyens de tri sont prévus pour comparer la première et la deuxième valeur de caractérisation à des valeurs de la fenêtre biparamétrique et pour sélectionner les impulsions pour lesquelles les première et deuxième valeurs de caractérisation coïncident avec ladite fenêtre biparamétrique.

8. Procédé de discrimination d'impulsions électriques fournies par au moins un détecteur de rayonnement à semi-conducteur, dans lequel :

- on effectue au moins deux transformations d'une même impulsion de façon à obtenir une première impulsion transformée et une deuxième impulsion transformée, dans lesquelles une dérivée de l'impulsion par rapport à au moins un paramètre, dit paramètre de pente, qui est fonction d'au moins un paramètre de détection pris parmi l'énergie du rayonnement et la profondeur d'interaction du rayonnement, est augmentée,

- on intègre les première et deuxième impulsions transformées pour obtenir, respectivement, une première valeur de caractérisation et une deuxième valeur de caractérisation, et

- on sélectionne des impulsions selon un critère basé sur les première et deuxième valeurs de caractérisation.

9. Procédé selon la revendication 8, dans lequel on compare les première et deuxième valeurs de caractérisation à des valeurs correspondantes d'une fenêtre biparamétrique et on sélectionne les impulsions pour lesquelles les première et deuxième valeurs de caractérisation coïncident avec ladite fenêtre biparamétrique.

**Patentansprüche**

1. Vorrichtung zur Unterscheidung von elektrischen Impulsen, geliefert durch wenigstens einen Halbleiter-Strahlungsdetektor,
**dadurch gekennzeichnet, dass** sie umfasst:

- wenigstens eine erste Umwandlungseinrichtung (106a) der Impulse und wenigstens eine zweite Umwandlungseinrichtung (106b) der Impulse, die jeweils als Reaktion auf einen Impuls des Detektors einen ersten umgewandelten Impuls und einen zweiten umgewandelten Impuls liefern, wobei die ersten und zweiten Umwandlungseinrichtungen beide fähig sind, einen Wert einer Ableitung des Impulses in Bezug auf wenigstens einen Parameter, Neigungsparameter genannt, zu erhöhen, der abhängig ist von wenigstens einem Detektionsparameter, ausgewählt zwischen der Energie der Strahlung und der Wechselwirkungstiefe der Strahlung,
- wenigstens einen Integrierer (108a, 108b), fähig für jeden ersten umgewandelten Impuls einen ersten Charakterisierungswert zu ermitteln und für jeden zweiten umgewandelten Impuls einen zweiten Charakterisierungswert, wobei die genannten Charakterisierungswerte durch Integration der umgewandelten Impulse erlangt werden, und
- Sortierungseinrichtungen (110) der Impulse in Abhängigkeit von den ersten und zweiten Charakterisierungswerten.

2.  Vorrichtung nach Anspruch 1 zur Unterscheidung von geräuschbeeinflussten elektrischen Impulsen, die Frequenzfiltereinrichtungen (102) umfasst, um das Geräusch zu reduzieren.

3.  Vorrichtung nach Anspruch 1, bei der die ersten und zweiten Impulsumwandlungseinrichtungen beide in Reihenfolge zwischen einem Eingang und einem Ausgang des Signals , ein Bandfilter (110a) und einen Verstärker (112a) mit sublinearer Verstärkung umfassen.

4.  Vorrichtung nach Anspruch 1, bei der die ersten und zweiten Impulsumwandlungseinrichtungen beide in Reihenfolge zwischen einem Eingang und einem Ausgang des Signals ein Bandfilter und einen Verstärker mit quadratischer Verstärkung umfassen.

5.  Vorrichtung nach Anspruch 1, bei der die ersten und zweiten Impulsumwandlungseinrichtungen beide in Reihenfolge zwischen einem Eingang und einem Ausgang des Signals umfassen:

- einen ersten Zweig mit einem ersten Bandfilter (110b) und einem Verstärker (112b) mit quadratischer Verstärkung,
- einen zweiten Zweig, parallelgeschaltet zum ersten Zweig, ausgestattet mit einem zweiten Bandfilter (110c), das ein Durchlassband aufweist, das breiter ist als ein Durchlassband des ersten Filters, und

- einen Addierer (114), angeschlossen am Signalausgang und vorgesehen, Signale der genannten ersten und zweiten Zweige zu empfangen und zu addieren.

6.  Vorrichtung nach Anspruch 1, bei welcher der Neigungsparameter die Strahlungsenergie ist, oder die Wechselwirkungstiefe der Strahlung im Quadrat ist, oder die Strahlung im Quadrat ist, oder das Produkt aus Strahlungsenergie mal Wechselwirkungstiefe der Strahlung ist.

7.  Vorrichtung nach Anspruch 1, mit Speichereinrichtungen eines biparametrischen Fensters von Charakterisierungswerten, in denen die Sortierungseinrichtungen vorgesehen sind, um den ersten und zweiten Charakterisierungswert mit Werten des biparametrischen Fensters zu vergleichen, und um die Impulse zu selektieren, für die der erste und zweite Charakterisierungswert mit dem genannten biparametrischen Fenster zusammenfallen.

8.  Verfahren zur Unterscheidung von elektrischen Impulsen, geliefert durch wenigstens einen Halbleiter-Strahlungsdetektor, darin bestehend:

- wenigstens zwei Umwandlungen eines selben Impulses durchzuführen, um einen ersten umgewandelten Impuls und einen zweiten umgewandelten Impuls zu erhalten, in denen eine Ableitung des Impulses erhöht wird in Bezug auf wenigstens einen Parameter, Neigungsparameter genannt, der abhängig ist von wenigstens einem Detektionsparameter, ausgewählt zwischen der Energie der Strahlung und der Wechselwirkungstiefe der Strahlung,
- den ersten und den zweiten umgewandelten Impuls zu integrieren, um jeweils einen ersten Charakterisierungswert und einen zweiten Charakterisierungswert zu erhalten, und
- Impulse nach einem Kriterium zu selektieren, das auf dem ersten und zweiten Charakterisierungswert basiert.

9.  Verfahren nach Anspruch 8, bei dem man den ersten und zweiten Charakterisierungswert mit entsprechenden Werten eines biparametrischen Fensters vergleicht und die Impulse selektiert, für die der erste und der zweite Charakterisierungswert mit dem genannten biparametrischen Fenster zusammenfallen.

**Claims**

1.  Device for the discrimination of electrical pulses supplied by a semiconductor radiation detector, **characterized in that** it comprises:

- at least one first pulse transforming means (106a) and at least one second pulse transforming means (106b) respectively supplying, in response to a detector pulse, a first transformed pulse and a second transformed pulse, the first and second transforming means being in each case able to increase a value of a derivative of the pulse with respect to at least one parameter, called the slope parameter, which is a function of at least one detection parameter chosen from among the energy of the radiation and the interaction depth of the radiation,
- at least one integrator (108a, 108b) able to establish, for each first transformed pulse, a first characterization value and, for each second transformed pulse, a second characterization value, said characterization values being obtained by integrating transformed pulses and
- means (110) for sorting pulses as a function of the first and second characterization values.

2. Device according to claim 1, for the discrimination of electrical pulses affected by noise, comprising frequency filtering means (102) to make the noise white.

3. Device according to claim 1, in which the pulse transformation means comprise (in order) a pass-band filter (110a) and a sublinear gain amplifier (112a), between a signal input and output.

4. Device according to claim 1, in which the pulse transformation means comprise (in order) a pass-band filter and a quadratic gain amplifier (112a), between a signal input and output.

5. Device according to claim 1, in which the pulse transformation means may also comprise the following in order between a signal input and output:

- a first branch containing a first pass-band filter (110b) and a quadratic gain amplifier (112b),
- a second branch connected in parallel to the first branch, equipped with a second pass-band filter (110c) with a pass-band wider than a pass-band of the first filter,
- an adder (114) connected to the signal output and designed to receive and add signals from the said first and second branches.

6. Device according to claim 1, wherein the slope parameter is the energy of the radiation, or the interaction depth of the radiation, or the energy of the squared radiation, or the interaction depth of the squared radiation, or the product of the energy of the radiation by the interaction depth of the radiation.

7. Device according to claim 1, comprising means for storing a biparametric window of characterization values, in which the sorting means are provided for comparing the first and second characterization values with values of the biparametric window and for selecting the pulses for which the first and second characterization values coincide with said biparametric window.

8. Process for the discrimination of electrical pulses supplied by at least one semiconductor radiation detector, wherein:

- at least two transformations of the same pulse are effected so as to obtain a first transformed pulse and a second transformed pulse, in which a derivative of the pulse with respect to at least one parameter, called the slope parameter, which is a function of at least one detection parameter chosen from among the energy of the radiation and the interaction depth of the radiation is increased,
- the first and second transformed pulses are integrated in order to respectively obtain a first characterization value and a second characterization value and
- pulses are selected according to a criterion based on the first and second characterization values.

9. Process according to claim 8, wherein the first and second characterization values are compared with corresponding values of a biparametric window and selection takes place of the pulses for which the first and second characterization values coincide with said biparametric window.

FIG. 1

FIG. 2

EP 1 058 128 B1

FIG. 3

FIG. 6

12

FIG. 4

FIG. 5

FIG. 7

FIG. 8

FIG. 9

FIG. 10

FIG. 11

FIG. 12

FIG. 13